# EUROPEAN PATENT APPLICATION

(11) **EP 4 516 467 A1**
(43) Date of publication of application: **05.03.2025**
(21) Application number: 24189715.6
(22) Date of filing: 19.07.2024
(51) Int. Cl.: B25J 15/02, B25J 9/12, B25J 9/14

(54) **MOTORIZED PNEUMATIC GRIPPER**

(30) Priority: 31.08.2023 IT 202300017916
(71) Applicant: Gimatic S.r.l., 25030 Roncadelle (Brescia) (IT)
(72) Inventor: MAFFEIS, Stefano, 25030 Roncadelle (BS) (IT)
(74) Representative: Pes, Matteo

(57) **Abstract**

A gripper for industrial manipulators, in particular for apparatuses for visually inspecting transparent or semitransparent containers, is described. The gripper comprises a body, inside which an electric motor is housed, and a turnable portion constrained to the body. Jaws movable closer to and away from each other in order to hold and release a piece are present on the turnable portion. The electric motor is intended for imparting rotations to the turnable portion while the piece is held between the jaws. The gripper further comprises a pneumatic actuator, for example a piston, intended for controlling the opening of the jaws to release the piece. The electric actuator and the pneumatic actuator remain separate and do not interact while the electric actuator is on. Vice-versa, the electric actuator and the pneumatic actuator are integral while the pneumatic actuator is active. The gripper is particularly adapted for being used in inspection systems of the carousel type, for checking the quality of containers and vials in the pharmaceutical industry.

## Description

### Field of the invention

The present invention concerns a motorized pneumatic gripper for industrial manipulators and, in particular, for apparatuses for inspecting containers and vials in the pharmaceutical industry.

### Known art

In the field of industrial automation, the use of grippers combined with manipulators for gripping, moving and releasing objects is known.

The grippers for industrial manipulators are generally provided with a body and two or more jaws, or gripper fingers, mounted thereon. The jaws can be moved away from or closer to each other between an open position, or releasing position, in which they do not exert any pressure on the item to be manipulated, and a closed position, or gripping position, in which they exert to the item to be manipulated sufficient pressure to ensure that the piece is not accidentally released during its handling.

Jaw movement is achieved by exploiting either an electric actuator, such as an electric motor housed in the gripper body, or a pneumatic actuator, such as for example a cylinder-piston system also housed in the gripper body and supplied with compressed air.

A particular case consists of the grippers used in inspection apparatuses which carries out the quality control of containers and vials in the pharmaceutical industry. These are optical inspection apparatuses to inspect transparent or semitransparent vials, bottles, containers positioned along the production line in order to carry out quality control of 100 percent of the containers produced, both in terms of the integrity of the container and the respective closure, and in terms of the quantity and purity of the contents. In this inspection apparatuses, a plurality of grippers is arranged in a line, or in a circle according to a carousel configuration, with the grippers adjacent to each other. Each gripper picks up a container to bring it in front of a camera that captures one or more images of the container itself; the images are processed by a computer to detect any anomalies. A strobe light is often used to capture the images.

In the inspection apparatuses of this type, the grippers are most often arranged on a carousel structure and, in addition to the traditional opening and closing movement of the grippers, the grippers are required to rotate on their own longitudinal axis, which also corresponds to the axis along which the pieces are gripped, in order to simultaneously create a vortex in the liquid contained inside the containers/vials to be inspected. The images of the container and of the vortex acquired by the inspection apparatus allow to identify anomalies, such as the presence of impurities in the liquid, or an excess or a defect in the quantity of liquid, in its viscosity, etc.

Since the grippers are adjacent to each other and the space available on the carousel is minimal, grippers devoid of their own actuator are preferred in the inspection apparatuses just described, precisely because the actuators would have negative affect on the overall dimensions of each gripper and, ultimately, on the number of grippers mountable on the carousel. In practice, if the grippers were equipped with their own actuators for rotating the jaws and opening/closing the jaws, the grippers would have greater overall dimensions than those of the grippers available today, and the same carousel would inevitably be equipped with fewer grippers, other conditions being equal.

In the most widespread solutions, the grippers installed on the inspection apparatuses comprise a stem slidingly mounted in a specific seat of the body of the grippers; the stem is movable on the longitudinal axis between a distal position and a proximal position in response to a force exerted by a cam controlled by other mechanisms of the inspection apparatus. In particular, there is one cam for all the grippers. The position of the stem, with respect to the body of the gripper, univocally determines the position of the jaws, i.e. mechanically controls their opening and closing. In other words, the gripping and the releasing of the containers are controlled by a cam outside of the gripper, in particular a cam of the inspection apparatus but which cam acts on the sliding stem of each gripper; appropriate springs or other countering means bring the stem back to the initial closed position of the jaws.

In other known solutions, which also provide for rotating the jaws and, thus, the container or vial, the rotation of the grippers on the longitudinal axis is achieved by mounting the grippers on the carousel structure of the inspection apparatuses and by prearranging electric motors on the carousel structure for rotating a turnable portion of the grippers which comprises the jaws. The electric motors are each connected to one or more grippers by means of drive belts. The rotation of a pulley of the electric motor is transmitted by the belts to the turnable portion of the respective grippers, thus causing them to rotate on the respective longitudinal axis. The speed of rotation is generally between 400 and 800 revolutions per minute, but can also reach 3000 revolutions per minute.

In these traditional solutions, the grippers can thus be defined *passive grippers* since they are devoid of their own actuator inserted into the body of the gripper for the opening/closing of the jaws and for their respective rotation, and their operation depends on the cam and on the electric motor of the inspection apparatus, which are on the carousel structure.

Grippers equipped with their own actuator, i.e. an actuator mounted aboard the gripper, for rotating the jaws were also more recently suggested.

IT202019000002871, filed on 08/27/2019 in the name of the Applicant, describes a gripper for industrial manipulators, in particular for apparatuses for visually inspecting transparent or semitransparent containers, comprising:
- a body provided with a longitudinal axis and able to be fastened to an inspection apparatus,
- a turnable portion constrained to the body and rotatable with respect to it on the longitudinal axis,
- an electric motor housed in the body of the gripper for imparting the rotations of the turnable portion on the longitudinal axis, and
- jaws mounted on the turnable portion and movable closer to and away from each other with respect to it, in order to pick up and release a container or vial, i.e. movable to open and close;
- drive means for controlling the opening and closing movement of the jaws in response to stresses imparted by an actuator of the inspection apparatus, i.e. an actuator outside of the gripper.

In more detail, the gripper comprises a hollow drive shaft arranged on the longitudinal axis of the gripper. The hollow drive shaft is connected to the turnable portion of the gripper, so that the rotations imparted by the electric motor to the drive shaft, with respect to the longitudinal axis, are transmitted to the jaws. Therefore, the longitudinal axis of the gripper is the axis of rotation of the jaws as well. A control rod of the jaws is telescopically, i.e. slidingly, housed inside the drive shaft and has precisely the function of causing the jaws to open. The displacements of the control rod with respect to the drive shaft are imparted by the outer actuator, for example a cam of the inspection apparatuses on which the gripper is mounted. When the stress applied by cam on the control rod ceases, an elastic element automatically returns the jaws to close.

IT102009901732640, filed on 05/15/2009 in the name of Pharmamech, describes a gripper itself provided with an actuator which imparts the rotation of the jaws and controls their opening. In particular, this document describes two embodiments of a gripper designed for manipulating test tubes or vials in inspection apparatuses for quality control. With reference to the respective figures, both embodiments are provided with an actuator coaxial with respect to the axis of the gripper, which controls both the rotation of the jaws and their respective opening and closing. In particular, the actuator controls an outer shaft 8 and a control rod 10 which are arranged coaxially. The outer shaft 8 is hollow and the control rod 10 is inserted therein so as to telescopically slide. In the first embodiment, the outer shaft 8 is a drive shaft rotated by the actuator when the gripper is closed, to cause the test tube or the vial to rotate and allow inspection with an optical system. When the gripper is stationary, the control rod 10 is actuated, i.e., it is translated with respect to the drive shaft 8 in order to open the jaws and release the test tube/vial. In the second embodiment, the actuator is referred to as a "roto-actuator device" 14 and acts only on the control rod 10 which is susceptible both to translations with respect to the drive shaft 8 for opening and closing the gripper, and to rotations to rotate the test tube/vial, while the drive shaft 8 remains idle.

CN 1111353 describes a gripper in which the opening and the closing are controlled by an axial stem controlled, however, by a misaligned actuator, and the rotation is imparted by a belt-pulley system.

US 2008/0085507 describes a rotary gripper with three jaws: the opening and closing of the jaws are controlled by the same axial motor that controls the gripper rotation, but the movement of the jaws is achieved by rotating the jaws on an axis parallel to the gripper axis by means of spur gears.

US 2009/0179445 describes a gripper equipped with two motors, a first rotary motor that imparts rotation to a hollow drive shaft denoted by 20 in the figures, so as to rotate the jaws, and a second linear motor denoted by 22 in the figures and housed in the drive shaft 20, that acts as a telescoping push rod to open and close the jaws.

WO 2023/084350, in the name of the Applicant, describes a gripper which comprises a body provided with a longitudinal axis, a turnable portion constrained to the body in order to be able to rotate on the longitudinal axis, an electric motor for imparting the rotations to the turnable portion and jaws mounted on the turnable portion and movable closer to and away from each other in order to pick up and release an object. The electric motor is a single motor housed in the body of the gripper. Specifically, the electric motor imparts rotations to a drive shaft coaxial with the longitudinal axis and connected to the upper portion so that the jaws can be rotated on the longitudinal axis of the gripper. The assembly formed by the electric motor and the drive shaft is susceptible to translations along the longitudinal axis in response to a thrust imparted by an actuator outside of the gripper, in particular an actuator of the inspection apparatus on which the gripper is mounted, in order to impart the movement closer to/away from each other to the jaws and thus to determine the opening and closing of the jaws.

### Summary of the invention

Object of the present invention is to provide a motorized gripper, i.e. itself equipped with an electric motor for imparting the rotations of the jaws and the manipulated piece, which gripper is at the same time simple to make, compact and adapted for controlling the opening and the closing of the jaws without the intervention of specific actuators outside of the gripper, in particular without the intervention of a cam or drive belts of an inspection apparatus on which the gripper is mounted.

In other words, the present invention sets out to provide a gripper which is itself provided with the means necessary for imparting rotations to the jaws and controlling the opening and closing movements of the jaws, anyhow being interchangeable with the known grippers and thus having overall dimensions not greater than the overall dimensions of the known grippers, in order to be able to retrofit replace them, without having to modify the inspection apparatus with which the gripper is combined.

The present invention thus concerns a gripper for industrial manipulators according to claim 1.

In particular, the present invention concerns a gripper comprising:
- a body having a longitudinal axis and intended to be fastened to an outer apparatus, such as for example an inspection apparatus for inspecting vials and containers, in particular a carousel structure,
- a first electric actuator housed in the body, so that to remain within the overall dimensions of the body of the gripper,
- a turnable portion constrained to the body and rotatable with respect to it on the longitudinal axis,
- jaws mounted on the turnable portion and movable closer to and away from each other, in order to open/close the gripper and, thus, to hold and release a piece.

The gripper also includes a control shaft that engages the jaws and controls their movement towards and away from each other. The control shaft is coupled to the electric actuator, thus resulting:
- rotatable by the electric actuator on the longitudinal axis, in order to rotate the turnable portion and the jaws present aboard the turnable portion, and
- translatable on the longitudinal axis for moving the jaws closer to or away to/from each other and thus for opening and closing the gripper.

The rotation of the turnable portion together with the piece held by the jaws is caused by rotating the control shaft. The opening of the jaws and the release of the piece is caused by translating the control shaft, or the gripper is prepared to pick up a new piece.

The gripper comprises a second pneumatic actuator also housed in the body. The pneumatic actuator comprises a piston movable in a cylinder between a bottom dead center pmi and a top dead center pms, in response to the pressure exerted by compressed air supplied to the gripper by outer means, for example a pneumatic line of the inspection apparatus.

The piston is configured for interacting with the control shaft, thus functionally constraining itself thereto, for at least part of the travel of the piston. The functional constraint consists in the ability of the piston to impart a thrust on the control shaft to cause it to translate on the longitudinal axis.

This way, the movement of the piston between the bottom dead center pmi and the top dead center pms causes the control shaft to translate on the longitudinal axis and actuates the opening, if the gripper is normally closed, or the closing, if the gripper is normally open, of the jaws.

The two actuators, the electric actuator and the pneumatic actuator, remain separate and do not interact while the electric motor is on, i.e. when the jaws are kept rotating. Vice-versa, the electric actuator and the pneumatic actuator are integral, at least in translation, while the pneumatic actuator is active, i.e. when the pneumatic actuator is supplied with compressed air to open the jaws. The two conditions are asynchronous, alternating one with the other: while the jaws rotate on the longitudinal axis, they cannot open to release the piece.

The solution just described has different advantages with respect to known grippers.

A first advantage is constituted by the complete interchangeability of the gripper with respect to the know art grippers used in inspection apparatuses for inspecting containers and vials, due to the fact that the gripper according to the present invention can be made with the body having the same outer diameter as the body of the known grippers;

A second advantage is that the gripper is provided with two actuators, one electric, the other pneumatic, replacing the actuators generally provided in the inspection apparatuses or machines on which the grippers are installed. The two actuators allow to impart to the jaws the movements necessary for picking up/releasing a piece and for rotating the piece, without the apparatus, on which the gripper is installed, depending on actuators. This circumstance in turn allows to make the simplest inspection apparatuses and machines, and without belts or other parts subject to wear and the release of particles into the air.

A third advantage is that the adoption of two actuators, one electric, the other pneumatic, allows to make the gripper with a mechanically simpler structure than a solution with a single rototranslating actuator.

The structure of the gripper is relatively simple, since it doesn't provide concentric shafts, as provided by solutions of the known art, thus making it possible to assemble it in a short time at no excessive costs.

In the preferred embodiment, the electric actuator is an electric motor, for example with a cylindrical body, having a drive shaft extending on the longitudinal axis and being rotatable on the same axis. The drive shaft of the electric motor is made rotationally integral with the control shaft, in the sense that the two shafts are coupled so that to rotate integrally (synchronously). As an alternative, the control shaft and the drive shaft can be the same component, i.e. the control shaft can be a portion of the drive shaft. However, the preferred solution is the more practical one, with the shafts made separate and successively joined.

For example, the control shaft and the drive shaft are non-telescopically and non-concentrically butt coupled, so that the control shaft constitutes an extension of the drive shaft on the longitudinal axis. The coupling can be achieved by screwing, or by mechanical interference, etc.

In the preferred embodiment, the electric motor is slidingly housed in the body of the gripper, being susceptible to translations along the longitudinal axis from a bottom dead center pmi and a top dead center pms, in response to stresses imparted by the pneumatic actuator. In other words, the electric motor is floating in the body of the gripper. The bottom dead center pmi of the electric motor corresponds to a reciprocal position of the jaws selected from the close position and the spaced position, and the top dead center pms of the electric motor corresponds to the other reciprocal position of the jaws selected from the close position and the spaced position, depending on whether the gripper is configured normally open or normally closed.

The axial displacements of the electric motor generate corresponding axial displacements of the control shaft.

An elastic element is functionally interposed between the body and the electric motor in order to counteract the translations of the electric motor on the longitudinal axis and bring back the electric motor to the initial axial position, at the ceasing of the thrust exerted by the pneumatic actuator, or anyhow bring the electric motor to a retracted position, also different from the initial one, corresponding to the jaws pressing the piece: the retracted position will depend on the overall dimensions of the piece and, thus, on the distance between the jaws gripping the piece.

The gripper is preferably configured normally closed. The elastic element is a spring housed in the body, between the turnable portion and the electric motor. The spring is preloaded, so that to constantly exert a thrust on the electric motor in the direction that brings the electric motor to the respective bottom dead center pmi, corresponding to the jaws close together and closing onto a piece to be manipulated.

The spring is preferably coaxial to the longitudinal axis and more preferably surrounds the control shaft.

In the preferred embodiment, the gripper comprises a sleeve constrained to the electric motor and concentric to both the drive shaft and the control shaft, as well as the elastic element. For example, the spring is contained in the sleeve and the control shaft is inside the spring. The sleeve is in contact with an end of the body of the gripper when the electric motor is at the respective top dead center pms, thus determining the limit stop. In other words, the sleeve is integral to the electric motor and operates like a spacer with respect to an end of the body of the gripper, when the electric motor is pushed to the top dead center pms.

The gripper comprises a plurality of radial pins inserted through respective through-holes, also radial, drilled through the side walls of the body of the gripper, to prevent rotation of the sleeve on the longitudinal axis. The sleeve comprises, for each radial pin, a slot elongated in the axial direction. The radial pins engage by interference the respective through-hole and are each at least partially inserted into a corresponding elongated slot. In other words, the radial pins simultaneously engage the body of the gripper and the slots in the sleeve, and this prevents the sleeve from rotating (anti-turn function). The axial limit stops of the sleeve correspond to the radial pins into abutment against one of the two ends of the corresponding elongated slot; in other words, the radial pins prevent the sleeve from rotating but allow the sleeve to move axially, together with the motor, of a travel corresponding to the extent of the slots in the axial direction.

The jaws are slidingly housed in corresponding guides of the turnable portion, for example radial guides. The jaws can be two, or more than two, for example three.

In the preferred embodiment, the jaws are two, sliding in the same guide orthogonal to the longitudinal axis. The gripper comprises, for each jaw, a lever pivoted to the turnable portion and swinging in a plane parallel to the longitudinal axis. The swinging of the lever is controlled by the control shaft: an end of the control shaft is slidingly inserted into the turnable portion and engages the levers, so that the angular position of each lever univocally corresponds to the axial position of the control shaft. For example, the end of the control shaft can be equipped with chamfers into which the levers are inserted; alternatively, the end of the shaft can be hinged to the levers or joined thereto.

The transmission of the rotations from the control shaft to the turnable portion can be achieved in two ways:
- in a first way, the gripper comprises a pin radially inserted through the control shaft. The pin engages a slot of the turnable portion, so that to transmit the rotations on the longitudinal axis, and the pin axially slides in the slot. The axial extent of the slot is equal to or greater than the axial travel of the control shaft;
- in a second way, at least one portion of the control shaft which engages the turnable portion has a non-circular cross-section, for example polygonal, and engages a corresponding non-circular guide, for example complementary, of the turnable portion.

In both cases, a rotation imparted by the electric motor to the control shaft is transmitted to the turnable portion which will rotate on the longitudinal axis with respect to the body of the gripper, and the control shaft will anyhow slide inside the turnable portion, in order to activate the jaws.

In the preferred embodiment, an end of the control shaft protrudes from the body of the gripper and engages the turnable portion. The control shaft is telescopically movable with respect to the gripper body, between a retracted position and an extended position, which correspond to a condition selected from the jaws close together and the jaws spaced apart, respectively, depending on whether the gripper is normally closed (preferred condition) or normally open (kinematic reversal).

As far as the pneumatic actuator is concerned, the piston comprises a thrust portion or rod. At the bottom dead center pmi of the piston, the rod is separated from the electric actuator, i.e. does not touch it and does not apply a thrust thereon. At the top dead center pms of the piston, the rod is abutting against the electric actuator and applies an axial thrust thereon, which thrust causes the translation of the electric actuator inside the body of the gripper, which in turn causes the control shaft to extend and the jaws to activate.

In the preferred embodiment, as mentioned above, the electric actuator is an electric motor having a drive shaft rotatable on the longitudinal axis. The drive shaft is passing through the electric motor, i.e. an end of the drive shaft protrudes towards the control shaft and the opposite end of the drive shaft protrudes towards the pneumatic piston, in particular towards the rod of the piston. The rod of the piston can be brought into abutment against the corresponding end of the drive shaft, when the pneumatic piston is pushed by the compressed air. In this circumstance, the electric motor is turned off and the drive shaft is not rotating.

In particular, at the bottom dead center of the pneumatic piston, the rod is separated from the drive shaft, does not touch it and is rotationally decoupled therefrom. Therefore, in this configuration, the rotations imparted by the electric motor to the drive shaft cannot be transmitted to the rod of the pneumatic piston; consequently, the pneumatic piston is not rotated on the longitudinal axis. In this circumstance, the electric motor can be turned on and the drive shaft rotated.

Preferably, an elastic element is functionally interposed between the electric actuator and the pneumatic piston for countering the axial displacements of the pneumatic piston. The elastic element is preloaded and constantly exerts a thrust on the piston in the direction that moves the piston away from the electric actuator, in order to bring back the piston to the bottom dead center pmi when the compressed air supply ceases.

In the preferred embodiment, the operation of the gripper is as follows. The jaws are normally closed and it is necessary to spread them out to allow, between them, the insertion of a piece to be picked up; the moving away of the jaws is achieved with the electric motor off and thus with the drive shaft not rotating, by supplying compressed air to the pneumatic actuator. The compressed air pushes the pneumatic piston to the top dead center and this determines the axial displacement of the kinematic chain constituted by the electric actuator, the control shaft, the levers and, finally, the jaws. Once the piece is inserted between the jaws, the supply of compressed air is interrupted and the elastic elements make the kinematic chain just described move rearward; the pneumatic piston returns to its bottom dead center, whereas the electric actuator and the control shaft do not return to the initial point, since the jaws are closed onto the piece and the overall dimensions of the piece determine the return travel of the electric actuator and control shaft. The thrust exerted by the elastic element about the control shaft keeps the jaws pressing the piece, in order to hold it. At this point, the electric motor can be operated for rotating the drive shaft and the control shaft, thus resulting in the rotation of the turnable portion of the gripper and of the piece held between the jaws. At the end of the operation, the electric motor is turned off to stop the rotation and the piece can be released, by supplying compressed air to the pneumatic actuator and causing the opening of the jaws, as described above. In the light of the above, the rotation of the drive shaft and of the control shaft and the translation of these two shafts are asynchronous, i.e. they do not occur simultaneously.

### Brief list of the figures

Further characteristics and advantages of the invention will become clearer in the review of the following detailed description of its preferred, although not exclusive, embodiments illustrated by way of example and without limitations with the aid of the accompanying drawings, in which:
- figure 1 is a perspective and elevation view of an inspection apparatus for inspecting vials, comprising grippers according to the known art and grippers according to the present invention;
- figure 2 is an exploded view of a gripper according to the present invention;
- figure 3 is a perspective view of the gripper shown in figure 2;
- figure 4 is an axial sectional view of the gripper shown in figure 2, with the jaws close together, or closed;
- figure 5 is an axial sectional view of the gripper shown in figure 2, with the jaws spaced apart, or open;
- figure 6 is a perspective view of the gripper shown in figure 2, with the jaws close together or closed, and of a container to be picked up;
- figure 7A is an axial sectional view of the gripper shown in figure 2, in the configuration shown in figures 4 and 6 with the jaws close together or closed;
- figure 7B is an enlargement of the portion enclosed in the dotted rectangle of figure 7A;
- figure 8 is a perspective view of the gripper shown in figure 2, with the jaws spaced apart or open, and of a container to be picked up and which is inserted between the jaws;
- figure 9A is an axial sectional view of the gripper shown in figure 2, in the configuration shown in figures 5 and 8 with the jaws spaced apart or open;
- figure 9B is an enlargement of the portion enclosed in the dotted rectangle of figure 9A;
- figure 10 is a perspective view of the gripper shown in figure 2, with the jaws closed onto the container picked up and rotated;
- figure 11A is an axial sectional view of the gripper shown in figure 2, in the configuration shown in figure 10, with the grippers closed onto the container;
- figure 11B is an enlargement of the portion enclosed in the dotted rectangle of figure 11A;
- figure 12A is a perspective view of a gripping hand of a manipulator, in a first configuration, equipped with a different embodiment of the gripper according to the known art, intended for the screwing and unscrewing of container caps;
- figure 12B is an enlargement of the portion of figure 12A comprised in the dotted box;
- figure 13A is a perspective view of the gripping hand shown in figure 12A, in a second configuration;
- figure 13B is an enlargement of the portion of figure 13A comprised in the dotted box.

### Detailed description of the invention

In the drawings, the terms top, upper, bottom, lower are to be understood to refer to the orientation that the gripper has in the drawings themselves.

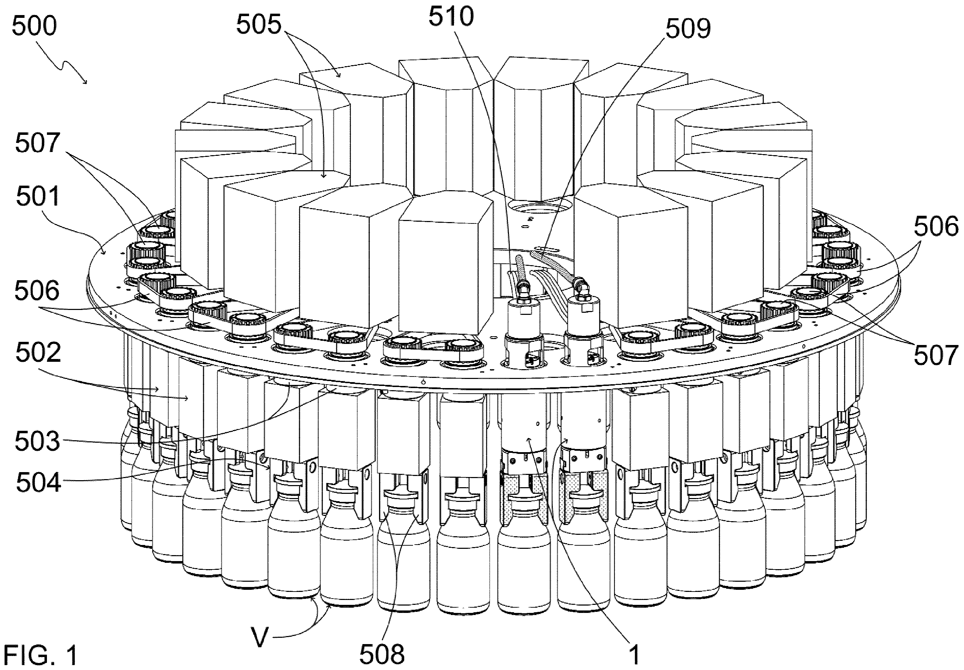

Figure 1 shows, in perspective, a carousel structure 500 of an inspection apparatus for inspecting vials or containers V, henceforth simply containers V. The carousel structure 500 comprises a circular frame 501 intended for being rotated to bring the containers V in front of an optical image capturing and processing system, for checking the quality of the containers V and of their respective contents.

Grippers 502 according to the known art and two grippers 1 according to the present invention are installed, with a regular pitch, at the perimeter of the circular frame 501: figure 1 thus allowing to contextualize the use of the grippers 502, 1 and to compare them. Each gripper 1, 502 holds a container V, while the circular frame 501 is rotated on its own axis.

As far as the grippers 502 according to the know art are concerned, each gripper 502 comprises a body 503 fastened to the circular frame 501, without a possibility of relative movements, and a portion 504 rotatably constrained to the body 503. Electric motors 505, in particular one motor 505 for every two grippers 502, are fastened aboard the circular frame. Each electric motor 505 is connected to two grippers 502 by means of a toothed belt 506 and toothed pulley 507, together defining a drive system. The toothed pulleys 507 are rotatable with respect to the body 503 of the respective gripper 502 on a longitudinal axis of the gripper 502: the rotation of the toothed pulleys 507, imparted by the electric motor 505 by means of the toothed belt 506, causes the rotation of the turnable portion 504 with respect to the body 503 of the gripper 502 and the rotation of the container V with it. The opening and the closing of the jaws 508 of the grippers 502 are controlled by an actuator inside each gripper 502 (not visible in figure 1).

As far as the grippers 1 according to the present invention are concerned, as can be noted by observing figure 1, they are not combined with an electric motor 505 of the inspection apparatus. The grippers 1 are connected to a compressed air source by means of respective connection lines 509 and to the power supply by means of electric wires 510. It is important to note that the grippers 1 according to the present invention are perfectly interchangeable with the grippers 502 according to the known art and can thus be used to retrofit the existing inspection apparatuses, thus simplifying the fine set-up of the carousel structure. Indeed, by equipping the circular frame 501 exclusively with grippers 1 in place of the grippers 502, it is no longer necessary to mount the electric motors 505, the toothed belts 506 and the gear wheels 507. This results in notable structural simplification, little overall dimensions in the area above the circular frame 501 and contained weights of the carousel structure, as well as greater cleanliness since it is no longer necessary to use rubber belts on the carousel structure, which belts are notoriously subject to wear which causes the formation of rubber particles fouling the structure and containers. The weight reduction of the circular frame 501 in turn results in a corresponding reduction of the inertia of the system during acceleration and braking, and consequently results in greater productivity of the inspection apparatus, which all other factors being equal, will be able to carry out the check of a greater number of batches of containers V per unit of time.

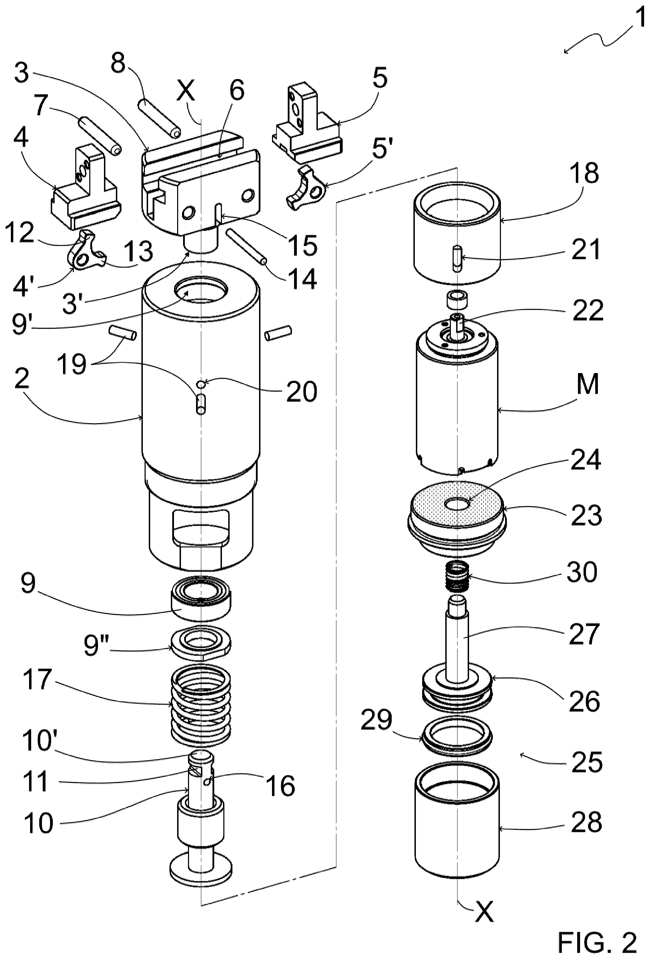

Figure 2 is an exploded view of a gripper 1 for industrial manipulators according to the present invention, particularly adapted for being mounted on inspection apparatuses for inspecting transparent or semitransparent containers V, for example in the pharmaceutical industry.

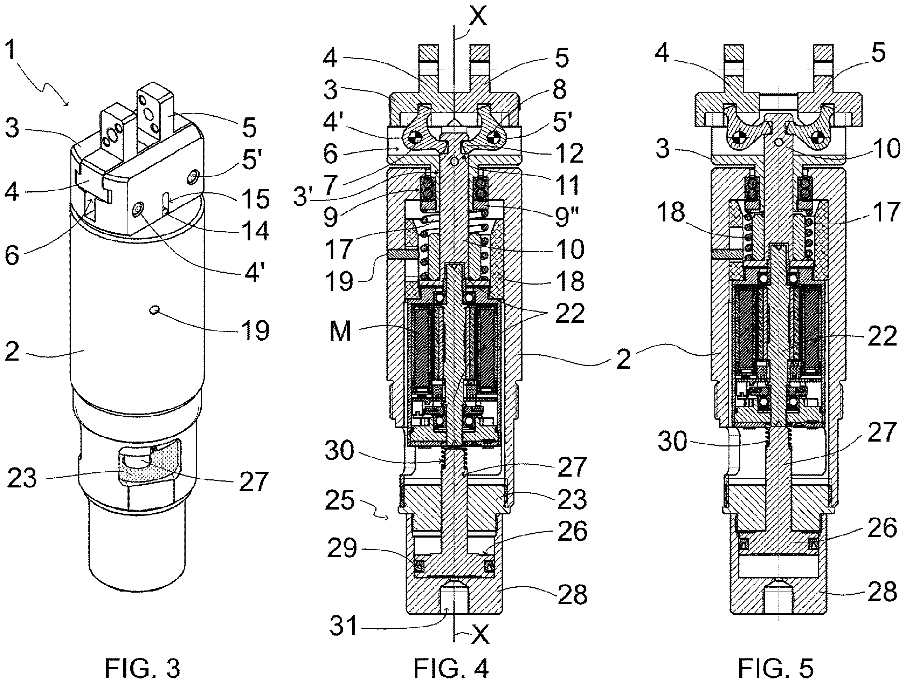

Figure 3 is a perspective view of the gripper 1 assembled.

With reference to figures 2 and 3, the gripper 1 comprises a body 2 able to be fastened to an outer structure, for example a circular frame 501 shown in figure 1. The body 2 is provided with a longitudinal axis X-X of the gripper 1. In the embodiment shown in the figures, the body 2 is cylindrical and hollow to house certain components of the gripper 1.

The gripper 1 further comprises an end portion 3 extending cantileverly from one end of the body 2, thus being rotatably constrained to the body 2 and not being able to rotate freely on the longitudinal axis X-X, but under the conditions that will be described hereunder. The end portion 3 will henceforth be named turnable portion 3.

Generally, the gripper 1 can comprise a plurality of jaws, for example three or four; in the embodiment 1 shown in the figures, the jaws are two and are identified by the numbers of reference 4 and 5. The jaws 4 and 5 are sliding in a guide 6 of the turnable portion 3 extending orthogonally to the longitudinal axis X-X, i.e. radially. The jaws 4 and 5 are thus susceptible to displacements in the guide 6, moving closer for closing the gripper 1 and pinking up a container V, and apart for opening the gripper 1 and releasing a container V. This configuration is not the only one possible: the gripper 1 can actually also be made with jaws 4 and 5 pivoted to the turnable portion 4 and rotatable with respect to it, without sliding in a guide.

More in detail, the jaws 4 and 5 are radially movable between a proximal position with respect to the longitudinal axis X-X, corresponding to the gripping position of the container V or a generic piece, and a distal position with respect to the longitudinal axis X-X, corresponding to the releasing position of the container V or the piece.

The thrust which moves the jaws 4 and 5 in the guide 6 is imparted by corresponding levers 4' and 5' which are pivoted to the turnable portion 3 by means of pins 7 and 8. The pins 7 and 8 are mounted skewed with respect to the longitudinal axis X-X or, in other words, the levers 4' and 5' swing in a plane parallel to the longitudinal axis X-X and, in particular in the example shown in the figures, a plane containing the longitudinal axis X-X.

A bearing 9, of the ball or roller type, is housed in a corresponding seat 9' present in the body 2 of the gripper 1; the function of the bearing 9 is to allow the rotation of the turnable portion 3 with respect to the body 2 on the longitudinal axis X-X. A washer or ring nut, used for holding the bearing 9 in the seat 9', is denoted by the reference 9"; the washer 9" fits into a corresponding sectional narrowing of the control shaft 10 (barely visible in the figures).

The gripper 1 further comprises a control shaft 10 housed coaxially and telescopically in the body 2. The function of the control shaft 10 is dual and asynchronous: alternatively rotating the turnable portion 3 and controlling the opening and the closing of the jaws 4, 5. In particular, the control shaft 10 is coaxial to the body 2, in the sense that it extends along the longitudinal axis X-X and is susceptible to clockwise and/or anticlockwise rotations on the same axis X-X in response to the thrusts imparted by an electric motor, as will be described hereunder. The control shaft 10 is housed almost completely in the body 2, with the exception of one end 10' which protrudes from the body 2 and is inserted into the turnable portion 3 through an opening 3' which also operates as a guide of the end 10'. Two diametrically opposite pockets 11, each of which engages a corresponding lever 4' or 5', are present on the end 10' of the control shaft 10.

The control shaft 10 is also susceptible to alternating translations on the longitudinal axis X-X, as will be explained hereunder, between a retracted position and an extended position.

The axial displacement of the control shaft 10 towards the extended position causes the moving away of the end 10' from the body 2 and consequently causes the moving apart of the jaws 4 and 5 and the opening of the gripper 1; vice-versa, the axial displacement of the control shaft 10 towards the retracted position causes the end 10' to move closer to the body 2 and the jaws 4 and 5 to close, i.e. causes the gripper 1 to close.

Indeed, as can be noted, the levers 4' and 5' each comprise two lobed portions 12 and 13, one lobed portion 12 for engaging the corresponding jaw 4, 5 and the other lobed portion 13 for engaging the corresponding pocket 11 present on the control shaft 10.

In order to prevent the turnable portion 3 from being separated from the body 2 of the gripper 1 and to maintain the coupling with the control shaft 10, the gripper 1 is provided with a retaining pin 14 which is radially inserted into a corresponding slot 15 of the turnable portion 3 and into a corresponding radial hole 16 of the control shaft 10, precisely for the purpose of holding the turnable portion 3 on the control shaft 10.

As can be noted by observing the figures, the slot 15 is elongated in the axial direction; the reason for this configuration lies in the fact that while the control shaft 10 is susceptible to axial translations, as explained above, and thus being telescopic with respect to the body 2, the axial position of the turnable portion 3 with respect to the body 2 does not vary. The slot 15 thus allows the retaining pin 14 to move therein in order to support the translations of the control shaft 10 between the retracted and extended positions, without transmitting undesired stresses to the turnable portion 3. On the other hand, the pin 14 transmits the rotations, in the sense that the pin 14 is precisely the one which allows to transfer the rotations imparted to the control shaft 10 on the longitudinal axis X-X to the turnable portion 3.

In an embodiment not shown in the figures, as an alternative to the use of the pin 14 for constraining the control shaft 10 to the turnable portion 3 and making these two elements rotationally integral on the longitudinal axis X-X, the control shaft 10 is made with the end 10' having a polygonal section, for example squared, hexagonal, etc.; the opening 3' of the turnable portion 3 guiding the end 10' of the control shaft 10 is made with section complementary to the section of the end 10'. Thanks to this detail, when the control shaft 10 is rotated on the longitudinal axis X-X, it drives the turnable portion 3 to rotate without using the pin 14, simply thanks to the shape coupling between the elements 10' and 3'. This detail does not affect the axial movements of the control shaft 10 with respect to the turnable portion 3. The anti-turn function is thus achieved in an alternative way to what is described above.

The axial movements of the control shaft 10 are countered by an elastic element which, in the example shown, is the spring 17 coaxially fit on the control shaft 10. The gripper 1 is preferably configured so that the close position of the jaws 4 and 5 is the normal one, i.e. the gripper is normally closed and the opening, i.e. the spacing apart of the jaws 4 and 5, only occurs in response to the axial movement of the control shaft 10 towards the extended position. The spring 17 is thus inserted with a preload into the body 2, functionally interposed between the end of the body 2 and the control shaft 10, to constantly exert a force onto the control shaft 10, which force holds or brings back the control shaft 10 in/to the retracted position.

Having the gripper 1 normally closed is a conservative choice in terms of safety, because it ensures that the jaws 4 and 5 hold the grip of the container V, also in the absence of pneumatic power to the gripper 1. Clearly, it is also possible to make the gripper in the opposite configuration, i.e. normally open, with activation for closing it, but this choice would result in less safety and greater energy consumptions.

Inside the body 2, the sleeve 18 is also housed coaxially to the body 2, the control shaft 10 and the spring 17, in a radially outer position with respect to the control shaft 10 and the spring 17, respectively. The sleeve 18 is axially sliding in the body 2 of the gripper 1, between a bottom dead center and a top dead center for a length at least corresponding to the travel of the control shaft 10 between the retracted and extended positions; the inner side surface of the body 2 acts as a cylinder into which the sleeve 18 slides. In order to prevent rotations of the sleeve 18 on the longitudinal axis X-X, the same sleeve 18 is rotationally locked by pins 19 (three in the example shown, arranged at 120°). The pins 19 are inserted into radial holes 20 drilled through the side wall of the body 2 of the gripper 1 and extend in length until each engages a corresponding slot 21 formed on the side wall of the sleeve 18. The slots 21 extend axially to allow the axial translations of the sleeve 18, as explained above.

Inside the body 2, below the control shaft 10 when observing the figures, there is a single electric motor M whose drive shaft 22 is coaxial to the longitudinal axis X-X and is fastened to the control shaft 10, butt coupled, for example by screwing, so that the drive shaft 22 and the control shaft 10 are integral both while rotating and translating. The outer diameter of the electric motor M is slightly less than the inner diameter of the body 2 of the gripper 1, so that the axial displacements of the motor M are not hindered by contact with the body 2. The travel of the electric motor M in the body 2 is between 5 mm and 15 mm, preferably of 8 mm. The electric motor M is thus floating in the body 2.

The sleeve 18 acts as an upper abutment for the motor M, which is axially translatable inside the body 2. When the sleeve 18 reaches the top dead center corresponding to the sleeve in abutment against the end of the body 2 on which there is the turnable portion 3, the motor M reaches the limit stop and can no longer move forward. In this sense, the sleeve 18 acts as a spacer, thus preventing excessive compression of the spring 17, excessive thrust on the bearings 9 and the control shaft 10 overcoming the limit stop in the extended position.

The upper end of the electric motor M, from which the drive shaft 22 protrudes, stays in abutment against the sleeve 18, at its perimeter, and against the lower end of the control shaft 10.

The drive shaft 22 crosses the electric motor M from side to side, i.e. is a through-shaft. In particular, the lower end of the drive shaft 22 stays flush with the lower surface of the electric motor M.

The electric motor M, preferably of the brushless type, is powered by the electric wires 510 shown in figure 1. Turning on the electric motor M determines the clockwise or anticlockwise rotation of the drive shaft 22, which in turn rotates the control shaft 10 and the turnable portion 3 with the jaws 4 and 5 aboard. A first kinematic chain thus comprises the assembly of elements M, 22, 10, 3-5, 4', 5' and the activation of the electric motor M determines the rotation of the jaws and thus of the container V possibly held on the longitudinal axis X-X.

The body 2 of the gripper 1 is closed at the bottom by a cap 23 provided with an axial through-hole 24.

The gripper 1 further comprises means intended for controlling the opening of the jaws 4-5, as will now be described, particularly comprises a pneumatic actuator 25 intended for this function.

The pneumatic actuator 25 comprises a piston 26 equipped with a rod 27 and a corresponding cylinder 28 which, in the example shown, is a cylindrical element which can be screwed to the body 2 of the gripper 1 at its lower portion. The rod 27 of the piston 26 is slidingly inserted through the axial through-hole 24 of the cap 23. The cylinder 28 is facing upward in figure 1 and is reached by the lines of compressed air 509, which lines are inserted into the fitting 31 for supplying compressed air inside the cylinder 28, under the piston 26. The piston 26 is axially inserted into the cylinder 28, thus being movable on the longitudinal axis alternately in the two directions, in response to the thrust exerted from time to time by the compressed air supplied by the connecting lines 509 shown in figure 1. The rod 27 of the piston 26 is facing the electric motor M. A gasket 29, of single lip or O-ring type, surrounds the piston 26 and ensures the seal with the cylinder 28.

In the example shown in the figures, the volume within which the piston 26 moves is thus delimited below and on the side by the cylinder 28 and on top by the cap 23.

The cylinder 28 is to be considered part of the body 2, also when it is screwed or anyhow fastened to the rest of the body 2.

There is a spring 30 between the piston 26 and the electric motor M, and in particular between the rod 27 of the piston 26 and the drive shaft 22 of the electric motor M, and is arranged coaxially to these elements. The rod 27 of the piston 26 and the drive shaft 22 of the electric motor M are not made integral, in the sense that they are not fastened to each other but, as will be explained hereunder, axial movements between these elements are possible.

Figure 4 is an axial sectional view of the gripper 1, in particular of a section considered on a plane containing the longitudinal axis X-X and the median axis with respect to the jaws 4, 5. The gripper 1 is shown in a closed configuration, i.e. with the jaws 4-5 close together. In this configuration, the piston 26 is at the respective bottom dead center pmi inside the cylinder 28, which cylinder is not supplied with compressed air. The rod 27 of the piston 26 is separated from the drive shaft 22 of the electric motor M, whereby possible rotations imparted to the drive shaft 22 by the electric motor M are not transmitted to the piston 26 but are transmitted only to the turnable portion 3, as explained above; the spring 30 and the spring 17 are extended, the sleeve 18 and the electric motor M are retracted inside the body 2 and the control shaft 10 is held by the spring 17 in its retracted position, so that the levers 4' and 5' are rotated one towards the other and the jaws 4 and 5 are closed. The retaining pin 14 is in the lower limit stop inside the slot 15 of the turnable portion 3. The spring 17 constantly exerts a thrust which, in the absence of stresses, holds the control rod 10 retracted. As mentioned above, the gripper 1 is normally closed, as shown in figure 4.

Figure 5 is an axial sectional view of the gripper 1 shown in the open configuration, which is the alternative configuration to the normally closed one and which only occurs on command and for a predetermined time lapse. The piston 26 is at the top dead center pms inside the cylinder 28 due to the pressure exerted by the compressed air supplied on command by the lines 509 through the fitting 31. The rod 27 of the piston 26 is thus completely raised and in abutment, butt coupled, against the motor shaft 22 of the electric motor M. The springs 17 and 30 are compressed, the sleeve 18 is also at the respective top dead center pms; in particular, the thrust exerted by the piston 26 through the second kinematic chain comprising the shafts 27 and 22 overcomes the force constantly exerted by the spring 17 in order to hold the gripper in the normally closed configuration described with regard to figure 4. The control shaft 10 is thus pushed by the rod 27 of the piston 26 extracted from the body 2 and displaces the levers 4' and 5' to the angular position shown in figure 5, corresponding to the jaws 4 and 5 spaced apart. The retaining pin 14 is in the upper limit stop inside the slot 15 of the turnable portion 3. The gripper can be selectively brought to the open configuration with the jaws 4 and 5 spaced apart thus thanks to the compressed air and the pneumatic actuator 25. The electric motor M is turned off and does not impart rotations to the drive shaft 22.

In practice, in the configuration shown in figure 4, the control shaft 10 can thus rotate on the longitudinal axis X-X but not translate and, in the configuration of figure 5, the control shaft 10 was translated on the longitudinal axis X-X but cannot rotate.

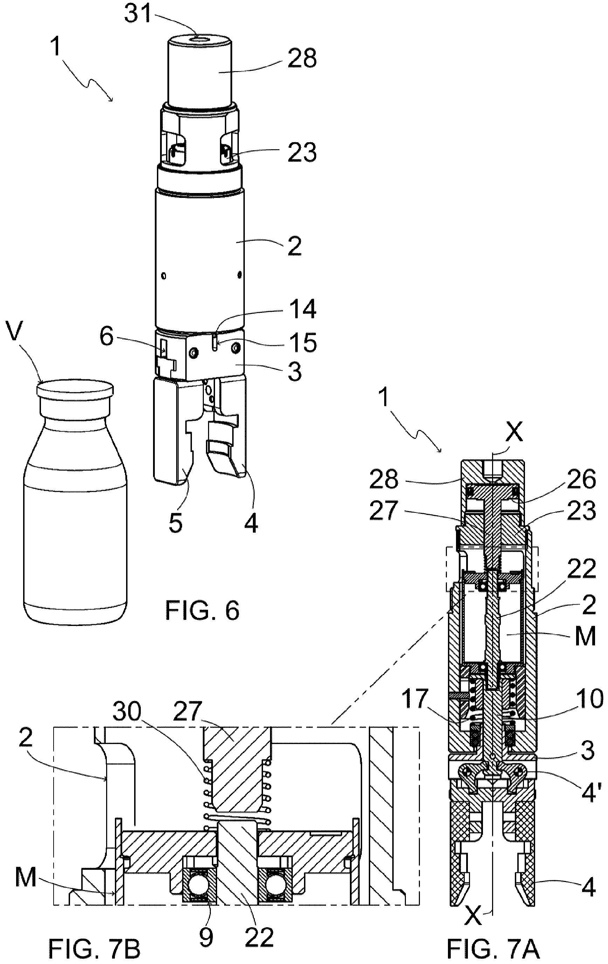

Figure 6 is a perspective view of the gripper 1 and a container V arranged next to the gripper 1. The gripper 1 is in the normally closed configuration, with the jaws 4 and 5 close together. The electric motor M is turned off and does not absorb electric current. The jaws 4 and 5 are shaped for being complementary to the profile of the container V.

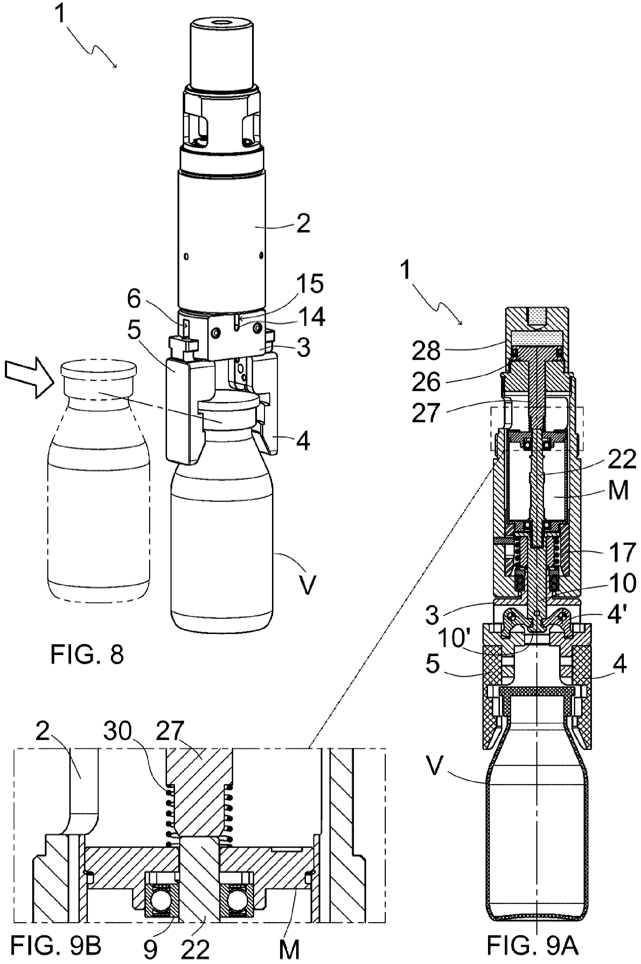

Figure 7A shows the gripper 1 in the same configuration as that of figures 4 and 6, i.e. in the closed configuration, but with the gripper 1 overturned with respect to how it can be observed in figure 1, mounted on the circular frame 501. The electric motor M is only schematized. The circular frame 501 is stopped at this time in order to allow the subsequent insertion of the container V between the jaws 4, 5 after they have been opened, as will be shown in figure 8. The piston 26 is at the pmi.

Figure 7B is an enlargement of the portion of figure 7A shown in the dotted box and shows, in detail, the portion of the gripper 1 in which the rod 27 of the piston 26 and the drive shaft 22 of the electric motor are facing, staying separate. As can be noted, an interstice is indeed present between the end of the rod 27 and the end of the drive shaft 22, and the two shafts do not touch each other.

Figure 8 is a perspective view of the gripper 1 and a container V inserted between the jaws 4 and 5 but not held. The gripper 1 is in the open configuration, in particular of maximum opening, with the jaws 4 and 5 at the maximum distance; as can be noted, the jaws 4 and 5 slightly protrude from the guide 6 of the turnable portion 3. Outer means push the container V between the jaws 4 and 5. Thus, in figure 8, there is a clearance between the jaws 4-5 and the container V, precisely for allowing the insertion.

Figure 9A shows the gripper 1 in the same configuration as that of figures 5 and 8, i.e. in the open configuration, but with the gripper 1 overturned with respect to how it can be observed in figure 1, mounted on the circular frame 501. The electric motor M is only schematized. At this time, the container V is inserted between the jaws 4, 5, as shown in figure 8. Compressed air is supplied into the cylinder 28 and the piston 26 is at the pms, therefore the rod 27 is in the position of maximum extension outside of the cylinder 28. Observing the lower part of figure 9A, it is possible to see the presence of a clearance between the container V and the jaws 4, 5 open wide. The end 10' of the control rod 10 is almost inserted between the jaws 4 and 5.

The piston 26 is configured for interacting with the control shaft 10, for at least part of the travel of the piston 26. In particular, the piston 26 can be functionally constrained to the control shaft 10 so that to impart a longitudinal thrust to the control shaft 10 to cause its longitudinal translation, as will now be explained.

Figure 9B is an enlargement of the portion of figure 9A shown in the dotted box and shows, in detail, the portion of the gripper 1 in which the rod 27 of the piston 26 and the drive shaft 22 of the electric motor are in abutment, butt coupled. The spring 30 is compressed and the rod 27 of the piston 26 has indeed pushed the drive shaft 22 and the entire electric motor M to the top dead center inside the body 2. The control shaft 10 can thus be pushed longitudinally by the piston 26 which rests thereon.

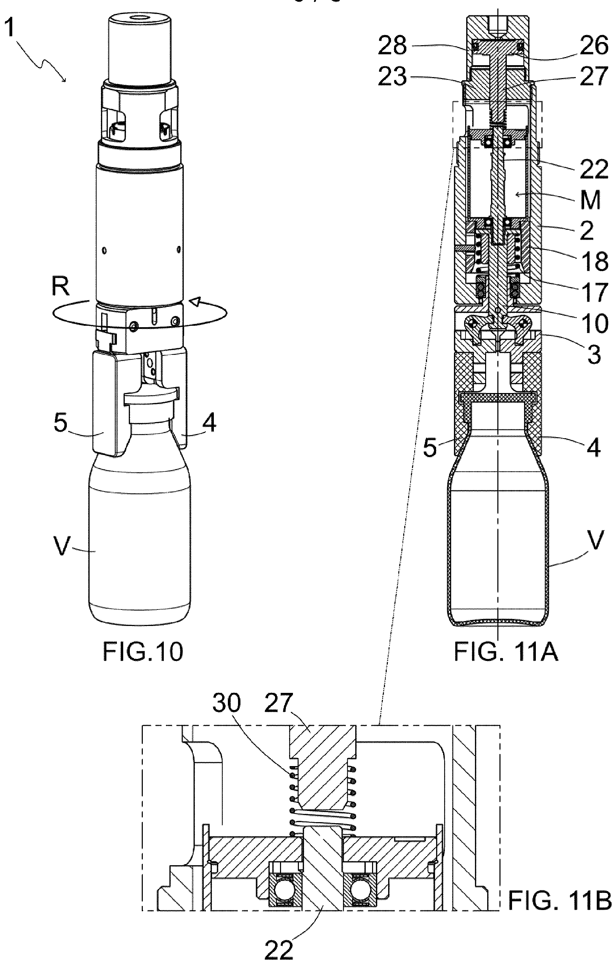

Figure 10 is a perspective view of the gripper 1 and a container V inserted and held between the jaws 4 and 5. The gripper 1 is in the closed configuration, in particular in a configuration not of maximum closure, as the one shown in figures 4, 6, 7A and 7B, but in a position intermediate between the previous ones shown, in which the jaws 4 and 5 are not at the respective minimum distance since there is the container V between them and the jaws 4, 5 must be able to exert pressure to hold it. In this regard, the spring 17 has the function of exerting the force necessary for the jaws 4 and 5 to in turn exert sufficient present onto the container V, in order to hold it effectively during the rotation. As depicted by the arrow R, in this configuration, the turnable portion 3 of the gripper 1 is rotated on the longitudinal axis X-X together with the container V.

Figure 11A shows the gripper 1 in the same configuration as that of figure 10. As can be noted by comparing figures 11A and 7A, the jaws 4, 5 are not in the same relative position, despite the fact that the piston 26 is at the pmi also in the configuration shown in figures 10 and 11A. The difference is compensated by the spring 17 which, as far as what is described above, is preloaded and works in extension; the spring 17 in figure 11A is thus slightly less extended than the same spring 17 shown in figure 7A. This characteristic indeed determines the continuous application of pressure onto the container V by the jaws 4, 5.

Figure 11B is an enlargement of the portion of figure 11A shown in the dotted box and shows, in detail, the portion of the gripper 1 in which the rod 27 of the piston 26 and the drive shaft 22 of the electric motor are facing, staying separate. As can be noted, an interstice is indeed present between the end of the rod 27 and the end of the drive shaft 22, and the two shafts do not touch each other. Due to the compensation just explained, the distance between the shafts 22 and 27 is greater in figure 11B than the distance between the same shafts 22 and 27 in figure 7B.

When the container V has been inspected, the rotation R is stopped and the gripper 1 can be opened, as shown in figure 8, to release the container V.

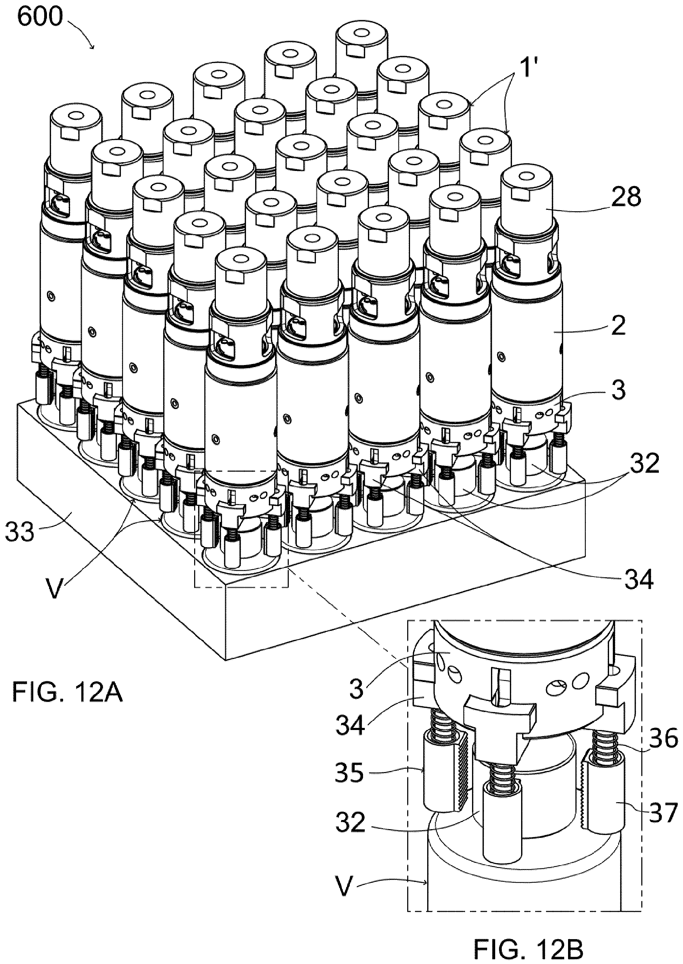

Figure 12A is a perspective view of a gripping hand 600 (end of an arm tool) of an industrial manipulator intended for moving caps 32 of containers V and intended for the screwing and unscrewing of caps 32 on the respective containers V. By simplicity, only the grippers 1' according to a different embodiment of the present invention of the gripping hand 600 are shown and not the supporting structures, the electric and pneumatic connections, etc. of the grippers 1'. It is assumed that the body 2 of the grippers 1' is held by the supporting structure of the gripping hand 600.

As can be noted, the gripping hand 600 comprises twenty five grippers 1' arranged side by side in a 5x5 matrix configuration, according to the present invention. Corresponding twenty five containers V capped with caps 32 are arranged on a tray 33, ready to be uncapped. In other words, the gripping hand 600 has the task of unscrewing the caps 32 from the containers V present in the tray 33.

The grippers 1' are oriented vertically, i.e. with the longitudinal axis X-X vertical and with the turnable portion 2 facing the tray 33.

As can be noted, the grippers 1' are each provided with four jaws 34 arranged cross-like on the turnable portion 3 and sliding in corresponding radial guides of the turnable portion 3. In figure 12A, the gripping hand 600 has been immediately brought above the tray 33, so that the caps 32 are in the radius of action of the jaws 34, i.e. the caps 32 are between the open jaws 34.

Figure 12B better describes this configuration. It is an enlargement of the portion enclosed in the dotted box of figure 12B. The four jaws 34 are each provided with a finger 35 extended parallel to the longitudinal axis X-X of the gripper 1'. Each finger 35 is damped and telescopic, so that the gripper 1' can be lowered until bringing the fingers 35 into abutment against the container V. Each finger 35 comprises a spring 36 which constantly exerts thrust to keep the finger 35 extended and a rubber end portion 37 intended to rest on the cap 32, in particular on the outer side surface, and to exert pressure. As can be noted, the end portions 37 do not touch the cap 32.

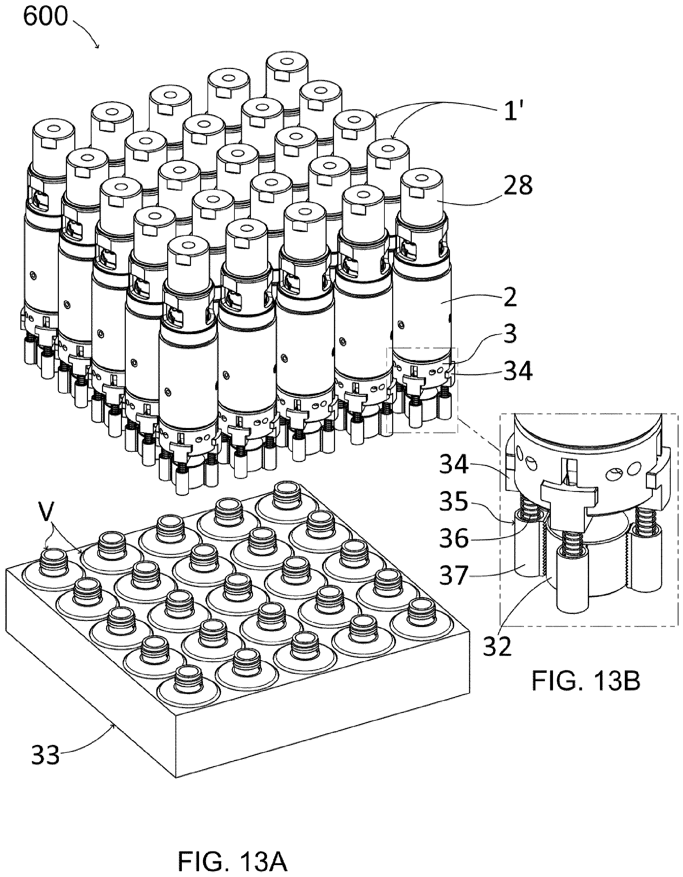

Figure 13A is a perspective view of the same gripping hand 600 with the gripper 1' in a different configuration, in particular with the grippers 1' gripping the corresponding caps 32. The caps 32 of the containers V were unscrewed from the containers V and picked up. Indeed, figure 13A shows the grippers 1' with the caps 32 held by the jaws 34.

Figure 13B is an enlargement of the portion enclosed in the dotted box of figure 13A and shows the end portions 37 gripping the cap 32 in more detail.

The electric actuator of the grippers 1' is used for rotating the turnable portion 3 and achieving the screwing or unscrewing of the caps 32, and the pneumatic actuator of the grippers 1' is used for achieving the opening of the jaws 34.

In the embodiment 1', the electric motor M is actually a gearmotor, in particular with an epicyclic reduction gear.

Summarizing, the advantages provided by the gripper 1 are the following:
- a complete interchangeability with respect to the grippers 502 of the known art used in the inspection apparatuses 500 of containers V, due to the fact that the outer diameter of the body 2 is equal to the outer diameter of the grippers 502;
- the gripper 1 is equipped with both an electric actuator, which controls the rotation of the turnable portion 3 and the jaws 4, 5 therewith, and a pneumatic actuator, which controls the opening of the jaws 4, 5 (considering to make the gripper 1 normally closed), and does not thus require the inspection apparatus 500 to be specially equipped with its own actuators;
- the electric actuator is a single electric motor;
- the structure of the gripper 1 is relatively simple, since it does not provide concentric shafts (the shafts 22 and 27 are coaxial but not concentric and sliding one inside the other), which makes it possible to be assembled in a short time at no excessive costs;
- the gripper 1 allows to eliminate the belts 506 which are problematic in the clean rooms due to the dust they produce with wear.

Further advantages in the structure with decoupled shafts 22 and 27 are also:
- no rotating compressed air distributors are necessary on the gripper 1;
- the gasket 29 does not rotate in the chamber 28 of the pneumatic piston 26 and is thus durable over time;
- by pushing on the back of the drive shaft 22, the bearings, which are generally small, inside the motor M itself (which are visible in figures 4 and 5 but not numbered) are not stressed by the load of the spring 17.

## Claims

1. A gripper (1, 1') for industrial manipulators, comprising:
- a body (2) having a longitudinal axis (X-X),
- an electric actuator (M) housed in the body (2),
- a turnable portion (3) constrained to the body (2) and rotatable with respect to the body (2) on the longitudinal axis (X-X),
- jaws (4-5, 34) mounted on the turnable portion (3) and movable closer to and away from each other in order to hold and release a piece (V),
- a control shaft (10) that engages said jaws (4-5, 34) and is coupled to the electric actuator (M), wherein the control shaft (10) is rotatable by the electric actuator (M) on the longitudinal axis (X-X), in order to rotate the turnable portion (3) and the jaws (4-5, 34), and is translatable along the longitudinal axis (X-X) in order to move said jaws (4-5, 34) closer or away with respect to each other;
- a pneumatic actuator (26-28) housed in the body (2), wherein the pneumatic actuator (26-28) comprises a piston (26) movable between a bottom dead center (pmi) and a top dead center (pms) in response to the pressure exerted by compressed air supplied to the gripper (1) by external means (509), and
wherein the piston (26) is configured for exerting a thrust on the control shaft (10) for at least part of the travel of the piston (26), and
wherein the movement of the piston (26) between the bottom dead center (pmi) and the top dead center (pms) causes the control shaft (10) to translate along the longitudinal axis (X-X) and actuates the jaws (4-5, 34),
**characterized in that**:
- the electric actuator (M) and the pneumatic actuator (26-28) are configured for remaining separate and not interacting while the electric actuator (M) is on, and
- the electric actuator (M) and the pneumatic actuator (26-28) are configured for remaining integral while the pneumatic actuator (26-28) is active.

2. Gripper (1, 1') according to claim 1, wherein the electric actuator (M) is an electric motor or a gearmotor having a drive shaft (22) turnable on the longitudinal axis (X-X) and made rotationally integral with the control shaft (10).

3. Gripper (1, 1') according to claim 2, wherein the control shaft (10) and the drive shaft (22) are non-telescopically butt coupled.

4. Gripper (1, 1') according to any one of the preceding claims, wherein the electric actuator is an electric motor or a gearmotor (M) slidingly housed in the body (2), being susceptible to translations along the longitudinal axis (X-X) between a bottom dead center (pmi) and a top dead center (pms), and wherein the bottom dead center of the electric motor or the gearmotor (M) corresponds to one reciprocal position of the jaws (4-5, 34) selected from the close position and the spaced position, and wherein the top dead center of the electric motor or the gearmotor (M) corresponds to the other reciprocal position of the jaws (4-5, 34) selected from the close position and the spaced position.

5. Gripper (1, 1') according to claim 4, comprising an elastic element (17) functionally interposed between the body (2) and the electric actuator (M) in order to counteract the translations of the electric motor (M) along the longitudinal axis (X-X).

6. Gripper (1, 1') according to claim 5, wherein the elastic element is a spring (17) housed in the body (2) between the turnable portion (3) and the electric actuator (M), and wherein the spring (17) is preloaded and constantly exerts a thrust on the electric actuator (M) in the direction that brings the electric actuator (M) to the respective bottom dead center (pmi) corresponding to the jaws (4-5, 34) close together.

7. Gripper (1, 1') according to claim 6, wherein the spring (17) is coaxial to the longitudinal axis (X-X).

8. Gripper (1, 1') according to any one of preceding claims 5-7, comprising a sleeve (18) constrained to the electric actuator (M) and concentric with the drive shaft (22) and the control shaft (10), as well as with the elastic element (17), wherein the sleeve (18) is in contact with an end of the body (2) of the gripper (1) when the electric actuator (M) is at the respective top dead center (pms), thus determining the limit stop.

9. Gripper (1, 1') according to claim 8, comprising a plurality of radial pins (19) inserted through respective radial through-holes (20) drilled through the side wall of the body (2) of the gripper (1), and wherein the sleeve (18) comprises, for each radial pin (19), a slot (21) elongated in the axial direction, and wherein the radial pins (19) each engage a corresponding elongated slot (21), and wherein the axial limit stops of the sleeve (18) correspond to the radial pins (19) in abutment against one of the two ends of the corresponding elongated slot (21).

10. Gripper (1, 1') according to any one of the preceding claims, wherein the jaws (4-5, 34) are slidingly housed in corresponding guides (6) of the turnable portion (3), and wherein the gripper (1) comprises, for each jaw (4- 5, 34), a lever (4', 5') pivoted to the turnable portion (3) and swinging in a plane parallel to the longitudinal axis (X-X), and wherein an end (10') of the control shaft (10) is slidingly inserted into the turnable portion (3) and engages said levers (4', 5'), and wherein the angular position of each lever (4', 5') univocally corresponds to the axial position of the control shaft (10).

11. Gripper (1, 1') according to any one of the preceding claims, comprising a pin (14) radially inserted through the control shaft (10), wherein the pin (14) engages a slot (15) of the turnable portion (3), thus transmitting rotations onto the longitudinal axis (X-X), and wherein the pin (14) can axially slide in the slot (15), and wherein the axial extent of the slot (15) is greater than or equal to the axial travel of the control shaft (10) or, alternatively, at least one portion of the control shaft (10) has a non-circular cross-section and engages a corresponding complementary guide of the turnable portion (3).

12. Gripper (1, 1') according to any one of the preceding claims, wherein an end (10') of the control shaft (10) protrudes from the body (2) of the gripper (1) and engages the turnable portion (3), and wherein the control shaft (10) is telescopically movable between a retracted position and an extended position, which correspond to a condition selected from the jaws (4-5, 34) close together and the jaws (4-5, 34) spaced apart, respectively.

13. Gripper (1, 1') according to any one of the preceding claims, wherein said piston (26) comprises a thrust portion or rod (27), and wherein at the bottom dead center (pmi) of the piston (26), the rod (27) is separated from the electric actuator (M) and does not apply a thrust, and wherein at the top dead center (pms) of the piston (26), the rod (27) is abutting against the electric actuator (M) and applies an axial thrust thereon.

14. Gripper (1, 1') according to claim 13, wherein the electric actuator (M) is an electric motor or a gearmotor having a drive shaft (22) turnable on the longitudinal axis (X-X) and passing through the electric motor (M), and wherein the rod (27) of the piston (26) can be brought into abutment against an end of the drive shaft (22).

15. Gripper (1, 1') according to claim 14, wherein at the bottom dead center (pmi) of the piston (26), the rod (27) is separated from the drive shaft (22) and is rotationally decoupled therefrom.

16. Gripper (1, 1') according to any one of preceding claims 13-15, comprising a preloaded elastic element (30) for counteracting the axial displacements of the piston (26), which constantly exerts a thrust on the piston (26) in the direction that moves the piston (26) away from the electric actuator (M).
